# EUROPEAN PATENT APPLICATION

(11) **EP 3 113 488 A1**
(43) Date of publication of application: **04.01.2017**
(21) Application number: 16174406.5
(22) Date of filing: 14.06.2016
(51) Int. Cl.: H04N 5/50, H04N 21/426, H04N 21/438, H04N 5/46, H04N 5/63, H04N 7/20, H04N 21/61, H04N 7/10

(54) **BROADCAST RECEIVING APPARATUS, DISPLAY APPARATUS, AND CONTROL METHOD THEREOF**

(30) Priority: 30.06.2015 KR 20150093200
(71) Applicant: Samsung Electronics Co., Ltd., Gyeonggi-do 16677 (KR)
(72) Inventor: PARK, Dong-jin, 17111 Gyeonggi-do (KR)
(74) Representative: Hewett, Jonathan Michael Richard

(57) **Abstract**

Disclosed are a broadcast receiving apparatus, display apparatus, and the control method thereof, the broadcast receiving apparatus including: a connector configured to be connected to a signal line that transmits one of a first broadcast signal received from a signal receiver and a second broadcast signal of a different kind from that of the first broadcast signal; a first signal processor and a second signal processor configured to be connected to the connector to respectively process the first broadcast signal and the second broadcast signal received through the connector; and a controller configured to determine which of the first broadcast signal and the second broadcast signal is received by selectively blocking an operation of the signal receiver receiving the first broadcast signal and to control a relevant processor among the first signal processor and the second signal processor to process the received signal of the first broadcast signal or second broadcast signal based on the result of the determination.

Thus the broadcast receiving apparatus may receive various broadcast signal via one connector and process the signal in the relevant signal processor, therefore more convenient broadcast receiving apparatus is provided.

## Description

The present invention relates to a broadcast receiving apparatus, a display apparatus, and a control method thereof, more particularly to a broadcast signal receiving apparatus capable of receiving a terrestrial, cable, or satellite broadcast signal, a display apparatus, and a control method thereof.

A broadcast receiving apparatus receives a broadcast signal, such as a satellite broadcast signal, a cable broadcast signal, and a terrestrial broadcast signal, and processes the broadcast signal to be displayed as an image. The broadcast receiving apparatus may output the broadcast signal, processed to be displayed as an image on a separate display apparatus having a panel, to the display apparatus. The broadcast receiving apparatus may be, for example, a set-top box. The display apparatus may display an image based on the processed broadcast signal on the display panel provided therein.

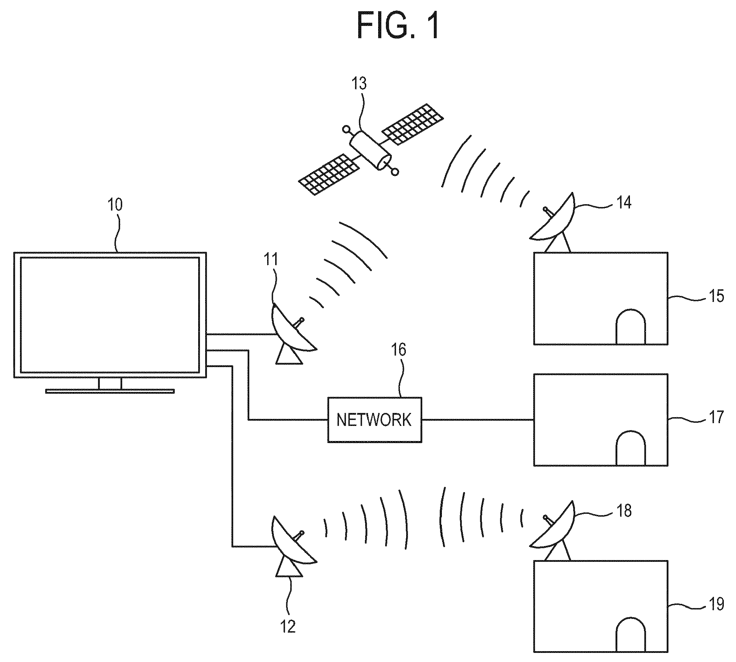

FIG. 1 schematically illustrates a configuration of a conventional broadcasting system. A broadcast receiving apparatus 10 may receive a broadcast signal in various ways. For example, the broadcast receiving apparatus 10 may receive a broadcast signal through a network 16 from a cable broadcasting station 17, receive a terrestrial broadcast signal in a radio frequency (RF) form broadcasted from an antenna 18 of a terrestrial broadcasting station 19 through an RF antenna 12, or receive a satellite broadcast signal from a satellite 13. The satellite broad cast signal may be broadcasted to the satellite 13 from an antenna 14 of a satellite broadcasting station 15. The satellite antenna 11 may include a converter or low-noise block downconverter (LNB). The converter serves to reduce a frequency of a broadcast signal received from the satellite 13 into one in a usable frequency band and to amplify output.

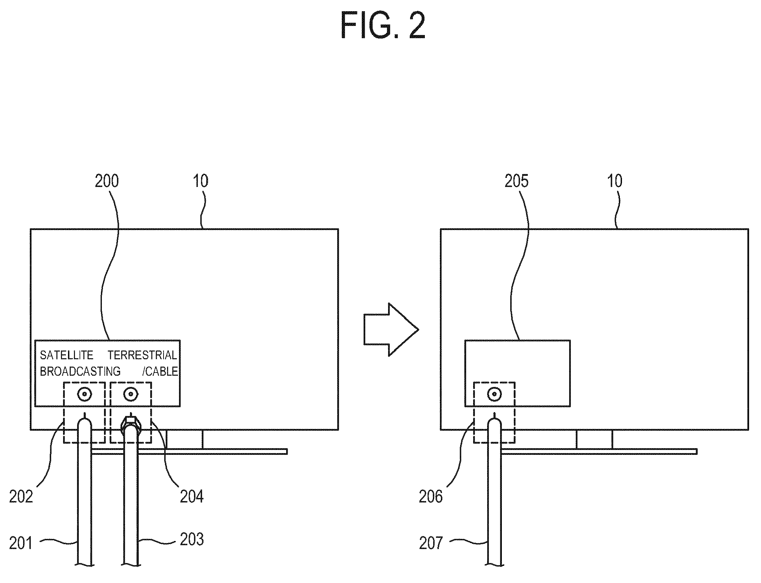

A left drawing of FIG. 2 illustrates a rear side of the conventional broadcast receiving apparatus 10 on which jacks 202 and 204 of a connector 200 to be connected with signal lines 201 and 203 are disposed. The jacks 202 and 204 provided on the conventional broadcast receiving apparatus 10 to connect the signal lines 201 and 203 are used separately for terrestrial and cable broadcasting and for satellite broadcasting. Thus, it has been necessary to connect the signal lines 201 and 203 to the relevant jacks 202 and 204. However, if a user does not know which signal lines 201 or 203 is relevant to which jack 202 or 204, the broadcast receiving apparatus 10 may not properly receive a signal. Thus, the plurality of jacks 202 and 204 for connecting the plurality of signal lines 201 and 203 cause complexity and inconvenience to connect the signal lines 201 and 203.

The broadcast receiving apparatus 10 receives a broadcast signal corresponding to a frequency band of a channel based on the channel selected by the user to display an image. However, when there is no broadcast signal corresponding to the frequency band of the selected channel, no image is displayed. The user may retrieve and store channels in advance in the broadcast receiving apparatus 10 in order to select only a channel through which a broadcast signal is received or may use a channel search function of the broadcast receiving apparatus 10.

The broadcast receiving apparatus 10 may retrieve a channel through which a broadcast signal is received among a plurality of channels and store information on the retrieved channel according to a control command input from the user. However, since the conventional channel search function is performed by each mode of received broadcast signals, the user has inconvenience of selecting a mode of a broadcast signal being received and retrieving a channel. Further, if the user does not accurately know a mode of a broadcast signal being received, the user has difficulty in implementing the channel search function.

An aspect of one or more exemplary embodiments of the present invention is to provide a broadcast receiving apparatus that allows a user to view an image or retrieve a channel without inconvenience even though the user does not know a kind of a received broadcast signal, a display apparatus, and a control method thereof.

According to an aspect of an exemplary embodiment, there is provided a broadcast receiving apparatus including: a connector configured to be connected to a terminal of a signal line that transmits one of a first broadcast signal received from a signal receiver and a second broadcast signal of a different kind from that of the first broadcast signal; a first signal processor and a second signal processor configured to be connected to the connector to respectively process the first broadcast signal and the second broadcast signal received through the connector; and a controller configured to determine which of the first broadcast signal and the second broadcast signal is received by selectively blocking an operation of the signal receiver receiving the first broadcast signal and to control the first signal processor or the second signal processor to process the received signal of the first broadcast signal or second broadcast signal based on the result of the determination. Accordingly, the broadcast receiving apparatus may allow a user to view an image or retrieve a channel without inconvenience even though the user does not know a kind of a received broadcast signal.

The first broadcast signal may include a satellite broadcast signal. Accordingly, the received broadcast signal may be a satellite broadcast signal.

The second broadcast signal may include either of a terrestrial broadcast signal and cable broadcast signal. Accordingly, the received broadcast signal may include various kinds of signals.

When the second broadcast signal is received, the controller may selectively demodulate the second broadcast signal either in a mode for the terrestrial broadcast signal or in a mode for the cable broadcast signal to determine which one of the terrestrial broadcast signal and the cable broadcast signal may be received and control the second signal processor to process the received signal based on the result of the determination. Accordingly, it may be quickly and accurately determine whether the received second broadcast signal is the terrestrial broadcast signal or the cable broadcast signal.

The controller may control supply of power to the signal receiver to selectively block the operation of the signal receiver receiving the first broadcast signal. Accordingly, it may be quickly and accurately determine whether the received broadcast signal is the first broadcast signal or the second broadcast signal.

The signal receiver may include a converter configured to down-convert a frequency of the first broadcast signal into a usable frequency according to a voltage level of the supplied power, and the controller may include a converter voltage controller configured to control the voltage level of the power of the converter. Accordingly, the broadcast receiving apparatus may block the operation of the signal receiver receiving the first broadcast signal with ease.

The controller may retrieve and store a channel of the first broadcast signal or the second broadcast signal. Accordingly, the user may easily select a channel on the broadcast receiving apparatus. Wherein the controller starts to retrieve the channel of the first broadcast signal or the second broadcast signal when the terminal of the signal line is connected to the connector. Accordingly, when the user connects the signal line, a channel may be automatically stored without any channel search request, thereby improving user convenience.

The broadcast receiving apparatus may further include a user input receiver configured to receive a user input, and the controller may start to retrieve the channel of the first broadcast signal or the second broadcast signal according to a channel search request from a user input through the user input receiver. Accordingly, even though the user does not know a kind of a received broadcast signal, the user may retrieve a channel with simple manipulation, thereby improving user convenience.

The controller may control a display to display information on the first broadcast signal or the second broadcast signal. Accordingly, an image may be provided for the user based on a channel selected by the user and a received broadcast signal.

According to an aspect of an exemplary embodiment, there is provided a control method of a broadcast receiving apparatus including a connector configured to be connected to a terminal of a signal line that transmits one of a first broadcast signal received from a signal receiver and a second broadcast signal of a different kind from that of the first broadcast signal, the control method including: determining which of the first broadcast signal and the second broadcast signal is received by selectively blocking an operation of the signal receiver receiving the first broadcast signal; and performing corresponding signal processing to the first broadcast signal or the second broadcast signal among a plurality of types of signal processing based on a result of determining whether the first broadcast signal or the second broadcast signal is received. Accordingly, even though the user does not know a kind of a received broadcast signal, the user may view an image or retrieve a channel.

The above and/or other aspects will become apparent and more readily appreciated from the following description of the exemplary embodiments, taken in conjunction with the accompanying drawings, in which:
FIG. 1 illustrates a configuration of a conventional broadcasting system.
FIG. 2 illustrates rear sides of the conventional broadcast receiving apparatus and a broadcast receiving apparatus according to an example embodiment.
FIG. 3 illustrates a block diagram of a broadcast receiving apparatus according to an example embodiment.
FIG. 4 illustrates a block diagram of a broadcast receiving apparatus according to another example embodiment.
FIG. 5 illustrates a block diagram of a broadcast receiving apparatus according to still another example embodiment.
FIG. 6 is a flowchart illustrating an operation of controlling a broadcast receiving apparatus according to an example embodiment.
FIG. 7 is a flowchart illustrating a process in which a broadcast receiving apparatus determines a kind of a received broadcast signal according to an example embodiment.
FIG. 8 is a block diagrams illustrating operations of a broadcast receiving apparatus according to an example embodiment.
FIG. 9 is a block diagrams illustrating operations of a broadcast receiving apparatus according to an example embodiment.
FIG. 10 is a flowchart illustrating a process in which a broadcast receiving apparatus determines a kind of a received broadcast signal according to an example embodiment.
FIG. 11 is a flowchart illustrating a process in which a broadcast receiving apparatus determines a kind of a received broadcast signal according to an example embodiment.
FIG. 12 is a flowchart illustrating a process in which a broadcast receiving apparatus performs a channel search according to an example embodiment.
FIG. 13 is a flowchart illustrating a process in which a broadcast receiving apparatus performs a channel search according to an example embodiment.
FIG. 14 illustrates a screen of a broadcast receiving apparatus performing a channel search according to an example embodiment.
FIG. 15 illustrates a screen of a broadcast receiving apparatus performing a channel search according to an example embodiment.
FIG. 16 illustrates a screen of a broadcast receiving apparatus that displays an image after a channel search is finished.

Hereinafter, a broadcast receiving apparatus that has a single integrated connector and displays an image based on an automatically received broadcast signal or retrieves a channel according to one example embodiment and a control method thereof will be described in detail with reference to the accompanying drawings.

A broadcast receiving apparatus 10 may receive a terrestrial broadcast signal, a cable broadcast signal, and/or a satellite broadcast signal. A terrestrial broadcast signal and a cable broadcast signal may be transmitted through the same kind of signal line and be processed by the same signal processor. However, a satellite broadcast signal is transmitted through a different signal line from that for the terrestrial and cable broadcast signals and be processed by a different processor in view of characteristics thereof. Hereinafter, for convenience of description, a first broadcast signal includes a satellite broadcast signal and a second broadcast signal includes a terrestrial broadcast signal or cable broadcast signal.

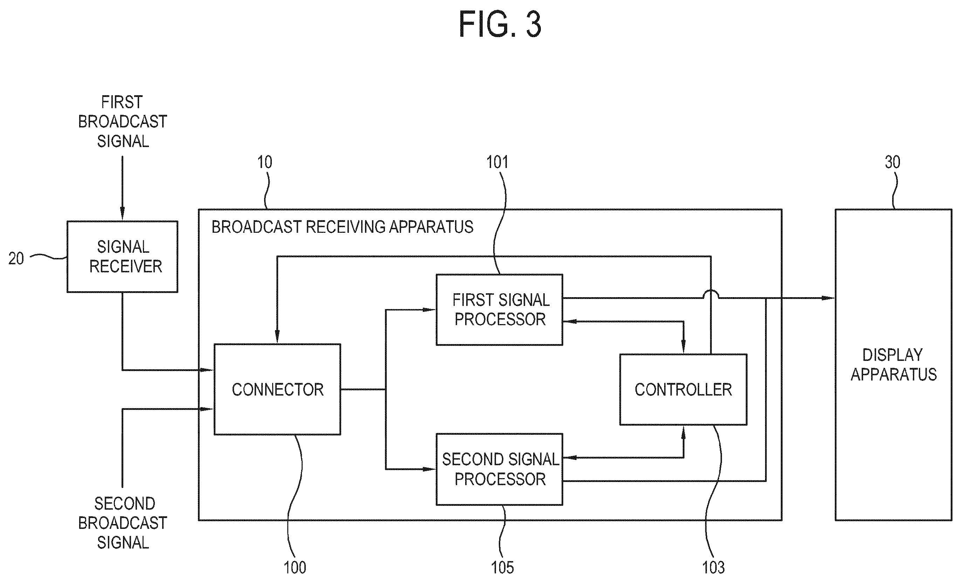

A right drawing of FIG. 2 illustrates a connector disposed on a rear side of a broadcast receiving apparatus 10 according to an example embodiment, and FIG. 3 illustrates a block diagram of the broadcast receiving apparatus 10 according to the example embodiment. The broadcast receiving apparatus 10 receives one of a plurality of broadcast signals through a connector 100 from an outside, processes the broadcast signal, and provides the processed broadcast signal to a connected display apparatus 30 to display an image or directly displays the processed broadcast signal on a display 107 included in the broadcast receiving apparatus 10. To this end, the broadcast receiving apparatus 10 according to the present embodiment may include the connector 100, a first signal processor 101, a second signal processor 105, and a controller 103. The broadcast receiving apparatus 10 may further include a signal receiver 20 to receive a first broadcast signal and an external display apparatus 30 to display an image based on a received broadcast signal.

The signal receiver 20 configured to receive the first broadcast signal. A second broadcast signal including a terrestrial broadcast signal or cable broadcast signal can be immediately processed in the broadcast receiving apparatus 10, however, the first broadcast signal including a satellite broadcast signal transmitted from a satellite needs to be converted by the signal receiver 20 before the broadcast receiving apparatus 10 process the received signal. An operation of the signal receiver 20 receiving the first broadcast signal can be selectively blocked according to control by the controller 103.

The connector 100 is connected to a signal line that transmits the first broadcast signal or second broadcast signal received through the signal receiver 20. The connector 100 provides the received broadcast signal to the first signal processor 101 or second signal processor 105 according to control of the controller 103. Further, the connector 100 may detect whether a broadcast signal is received through a connected signal line. When the connector 100 detects a current, voltage, or power in a level to be determined as a broadcast signal, the controller 103 may determine that at least one of the first broadcast signal and the second broadcast signal is received through the connector 100.

The right drawing of FIG. 2 illustrates the connector 200 including a jack 206 disposed on the rear side of the broadcast receiving apparatus 10 according to the present embodiment. The jack 206 has a structure of being connected to one of a signal line 201 transmitting the first broadcast signal and a signal line 203 transmitting the second broadcast signal.

According to another embodiment, an integrated signal line 207 may be used irrespective of a kind of a received broadcast signal. The integrated signal line 207 may transmit either the first broadcast signal or the second broadcast signal, and the jack 206 has a structure of being connected to the integrated signal line 207.

The controller 103 controls the operation of the signal receiver 20 receiving the first broadcast signal to determine a mode of a received broadcast signal. Subsequently, the controller 103 controls a relevant signal processor to process the received broadcast signal based on the determination. More specifically, the controller 103 blocks the receiving operation of the signal receiver 20, in which state when a broadcast signal is detected on the connector 100 , the controller 103 determines that the second broadcast signal is received. Whether a broadcast signal is received is determined based on whether a voltage, current or power in a level to be determined as a broadcast signal is detected by the connector 100. Further, if broadcast signal is not being detected on the connector 100 in a state where the operation of the signal receiver 20 receiving the first broadcast signal is blocked, the controller 103 controls the signal receiver 20 to perform the signal receiving operation. When the signal receiver 20 starts an operation of receiving a broadcast signal and a broadcast signal is being detected on the connector 100, the controller 103 determines that the first broadcast signal is received and controls a relevant signal processor to process the received broadcast signal.

In another embodiment, when a broadcast signal is detected in a state where the operation of the signal receiver 20 receiving the first broadcast signal is blocked, the controller 103 may control the second signal processor to process the received broadcast signal immediately. Further, when no broadcast signal is detected in a state where the operation of the signal receiver 20 receiving the first broadcast signal is blocked, the controller 103 may start the operation of the signal receiver 20 receiving the first broadcast signal and control the first signal processor to process the received broadcast signal immediately.

The first signal processor 101 and the second signal processor 105 are configured to process the first broadcast signal and the second broadcast signal, respectively. A broadcasting station and the broadcast receiving apparatus 10 transmit, receive, process, and display a broadcast signal according to a predetermined communication protocol. More specifically, the broadcasting station modulates a broadcast signal according to the communication protocol to transfer to a high-frequency carrier before transmission of the broadcast signal and transmits the broadcast signal, and the broadcast receiving apparatus 10 demodulates the received broadcast signal according to the communication protocol. The broadcast receiving apparatus 10 may display an image or the like based on the demodulated broadcast signal. Modulation includes amplitude modulation (AM), frequency modulation (FM), phase modulation (PM), or the like. Thus, the first signal processor 101 may demodulate the first broadcast signal modulated for the first signal processor 101 to process, and the second signal processor 105 may demodulate the second broadcast signal modulated for the second signal processor 105 to process. Processing of a broadcast signal may further include not only modulation and demodulation of a broadcast signal but also multiplexing, demultiplexing, analog-to-digital conversion, digital-to-analog conversion, decoding, encoding, image enhancement, and scaling of a received broadcast signal. The first signal processor 101 and the second signal processor 105 shown below in drawings are provided for illustrative purposes only, and the two signal processors may be designed as an integrated circuit (IC) in a single signal processor to process separate broadcast signals depending on an embodiment.

A broadcast signal processed in the first signal processor 101 or the second signal processor 105 is transmitted to the external display apparatus 30, and the display apparatus 30 displays an image based on the received signal.

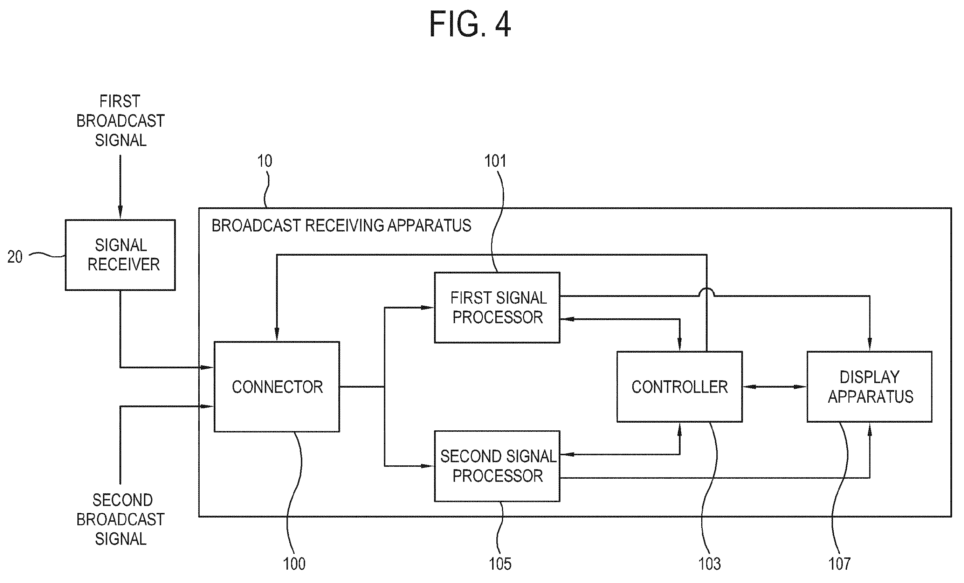

FIG. 4 illustrates a block diagram of a broadcast receiving apparatus 10 according to another example embodiment. The broadcast receiving apparatus 10 according to the present embodiment may further include a display 107 to display an image based on a broadcast signal processed by a first signal processor 101 and/or a second signal processor 105.

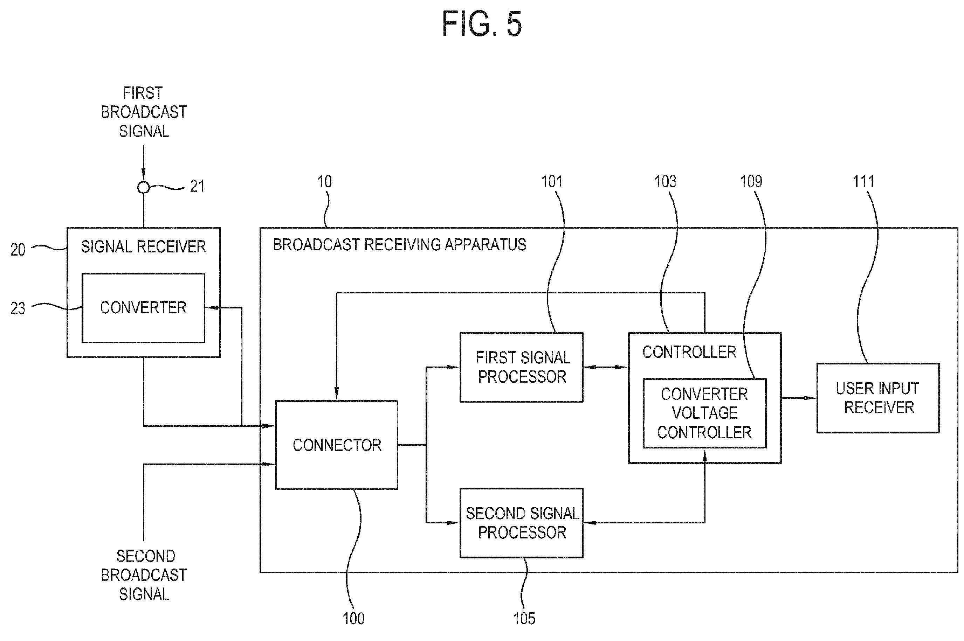

FIG. 5 illustrates a block diagram of a broadcast receiving apparatus 10 according to an example embodiment. A signal receiver 20 to receive a first broadcast signal may further include a converter 23 to convert a frequency of the received first broadcast signal and to amplify output so that the broadcast receiving apparatus 10 may process the received first broadcast signal converted by the converter 23. Further, the broadcast receiving apparatus 10 may further include a converter voltage controller 109 to control a voltage supplied to the converter 23.

The broadcast receiving apparatus 10 may further include a power supplier. The power supplier serves to convert input external power into power for operating the broadcast receiving apparatus 10 and to supply the power to each component. The power supplier may supply power to the outside through a connected signal line. According to the present embodiment, the power supplier may supply power to the signal receiver 20, more particularly to the converter 23 included in the signal receiver 20.

The signal receiver 20, as a component to receive the first broadcast signal among a plurality of broadcast signals, may include an antenna 21 and the converter (or a low-noise block (LNB)) 23. The converter 23 is provided in the signal receiver 20 and is supplied with power from the power supplier to down-convert the high-frequency first broadcast signal received through the antenna 21 into a signal in a 1 GHz band (for example, a signal in a range of 640 to 2,150 MHz) that the broadcast receiving apparatus 10 is capable of processing and to amplify output. Further, the converter 23 may be configured to remove noise included in a signal received through the antenna 21. The converter 23 may use a C band (4 to 8 GHz) and a Ku band (12 to 18 GHz) as a receiving frequency band and may also employ an X band (8 to 12 GHz), a Ka band (26.5 to 40 GHz), or the like.

The controller 103 may further include the converter voltage controller 109 to control power supply of the power supplier to the converter 23. The converter voltage controller 109 may control the power supplier to supply driving power (for example, a voltage of 13 V or 18 V) to the converter 23. That is, the converter voltage controller 109 blocks a voltage supplied to the converter 23 to block an operation of the signal receiver 20 receiving the first broadcast signal and supplies a voltage to the converter 23 to start the operation of the signal receiver 20 receiving the first broadcast signal.

According to another embodiment, the converter voltage controller 109 may adjust a level of a voltage supplied to the converter 23 to transmit a control command controlling an operation of the converter 23. That is, when the converter voltage controller 109 transmits a certain level of a voltage to the converter 23, the signal receiver 20 may stop or start the operation of receiving the first broadcast signal. Alternatively, according to a level of a voltage supplied to the converter 23, the signal receiver 20 may not transmit the first broadcast signal to the broadcast receiving apparatus 10 even though receiving the first broadcast signal.

The broadcast receiving apparatus 10 may further include a user input receiver 111 to receive a command for controlling the broadcast receiving apparatus 10 from a user. The user input receiver 111 may directly receive a manipulation command through a manipulation panel or receive a remote control signal including a manipulation command from the user through a remote control or the like.

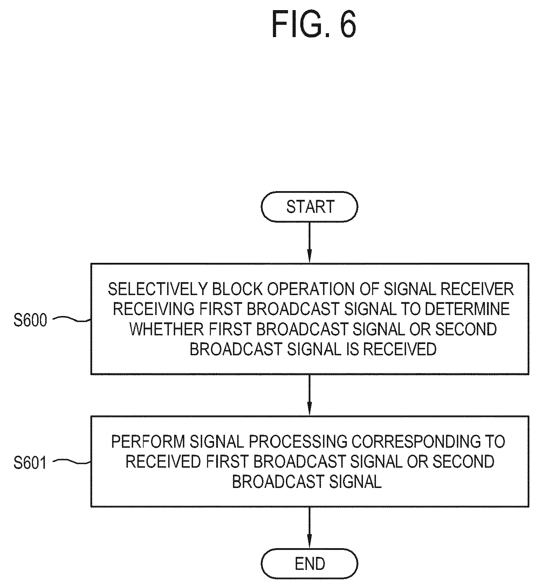

FIG. 6 is a flowchart illustrating an operation of controlling a broadcast receiving apparatus according to an example embodiment. First, a controller 103 controls an operation of a signal receiver 20 receiving a first broadcast signal to determine whether a received signal is the first broadcast signal or a second broadcast signal (S600). Subsequently, the controller 103 controls a relevant signal processor to process the received broadcast signal (S601).

The operation of the signal receiver 20 receiving the first broadcast signal is controlled by a converter voltage controller 109 selectively blocking or supplying a voltage supplied to a converter 23 or adjusting a level of the supplied voltage. When a broadcast signal is detected while the first broadcast signal is not received, the controller 103 determines that the received broadcast signal is the second broadcast signal. When no broadcast signal is detected while the first broadcast signal is not received, the signal receiver 20 starts the operation of receiving the first broadcast signal according to control by the controller 103, and the controller 103 determines that the received broadcast signal is the first broadcast signal.

Subsequently, when the received broadcast signal is the first broadcast signal, the controller 103 controls a first signal processor 101 to process the received broadcast signal. When the received broadcast signal is the second broadcast signal, the controller 103 controls a second signal processor 105 to process the received broadcast signal.

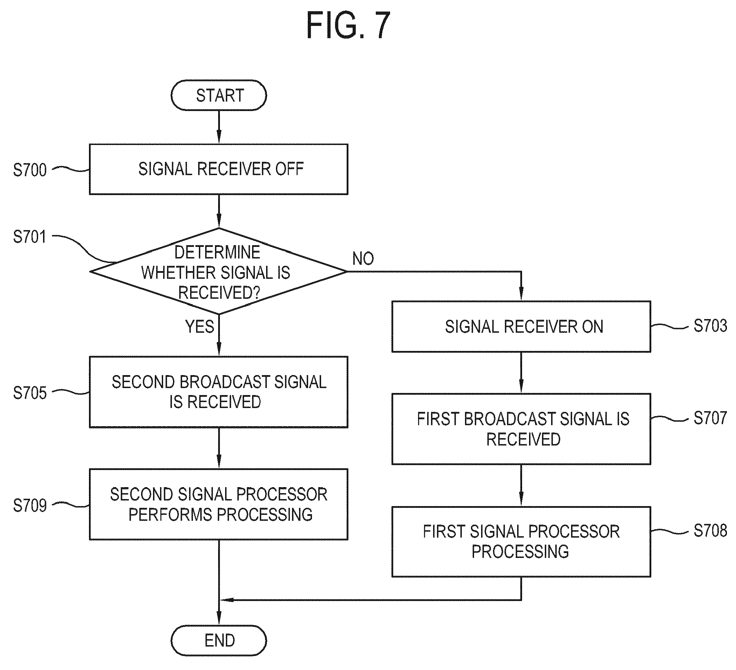

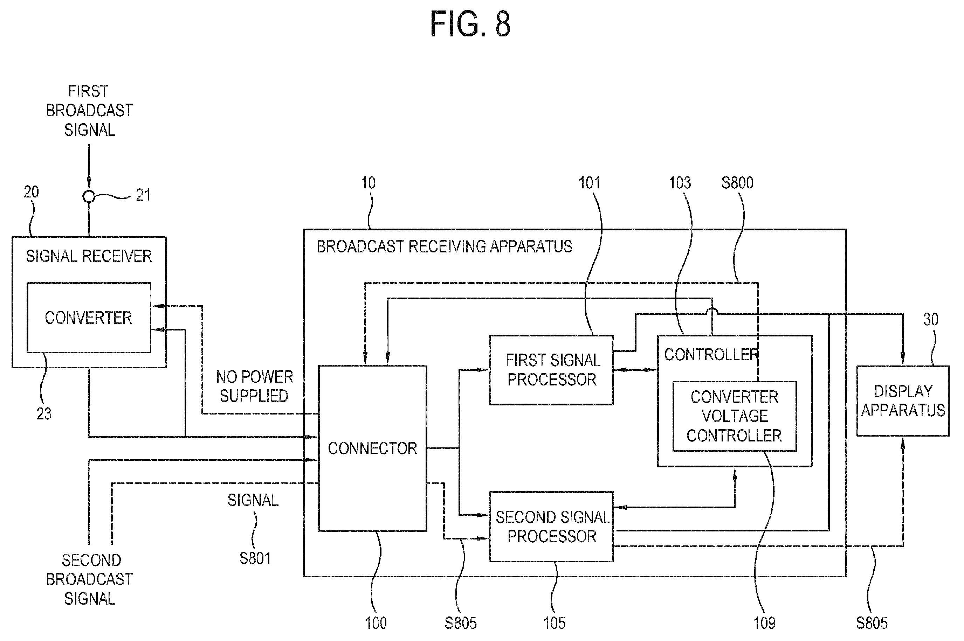

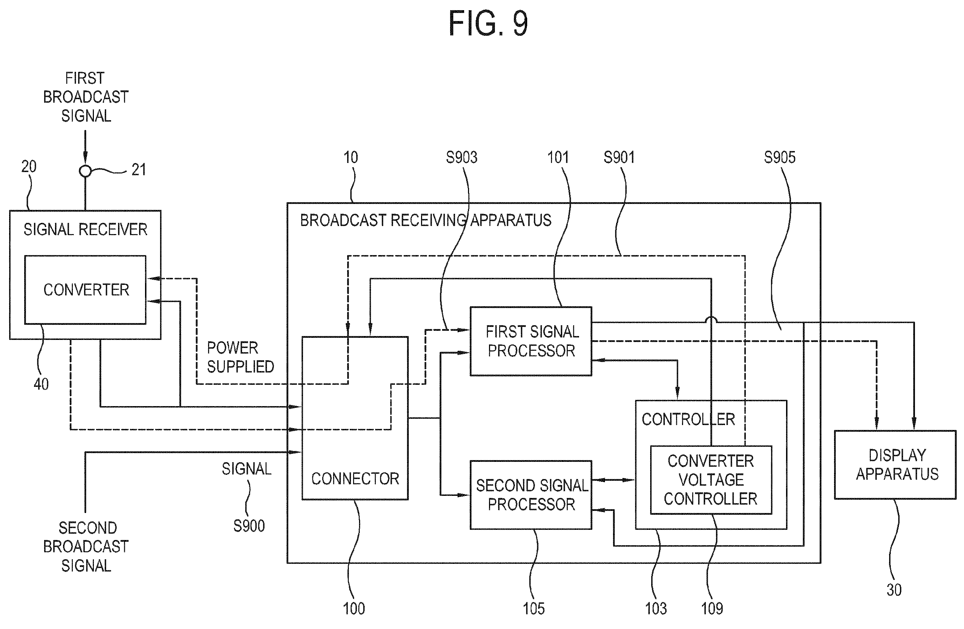

FIG. 7 is a flowchart illustrating a process in which a broadcast receiving apparatus determines a kind of a received broadcast signal and processes the received broadcast signal according to an example embodiment. Hereinafter, a process in which the broadcast receiving apparatus determines a kind of a received broadcast signal and a relevant signal processor processes the determined broadcast signal will be described with reference to FIG. 7. FIG. 7 is provided as an illustrative example only for convenience of description, and the embodiment is not limited thereto. In particular, although the broadcast receiving apparatus 10 may be connected to an external display apparatus 30 to transmit a processed broadcast signal thereto as illustrated in FIGS. 8 and 9, the broadcast receiving apparatus 10 may also include a display 107 therein as mentioned above.

First, a controller 103 blocks an operation of a signal receiver 20 receiving a broadcast signal (S700). Subsequently, the controller 103 determines whether a broadcast signal is detected (S701). When a broadcast signal is detected, the controller 103 determines that a second broadcast signal is received (S705). The controller 103 controls a second signal processor 105 to process the received second broadcast signal (S709). When no broadcast signal is detected (S701), the controller 103 starts an operation of the signal receiver 20 receiving a first broadcast signal (S703). The controller 703 determines that the first broadcast signal is received (S707). Subsequently, the controller 103 controls a first signal processor 101 to process the received first broadcast signal.

First, a converter voltage controller 109 controls a power supplier to block power supplied to a converter 23, thereby blocking the operation of the signal receiver 20 receiving the first broadcast signal (S700).

According to another embodiment, the converter voltage controller 109 may adjust a level of a voltage supplied to the converter 23, instead of blocking the voltage, thereby blocking the operation of the signal receiver 20 receiving the broadcast signal.

As described above, when a voltage, current or power in a level to be determined as a broadcast signal is detected by a connector 100, the controller 103 determines that a broadcast signal is detected (S701). The controller 103 determines that the broadcast signal, received while the receiving operation of the signal receiver 20 is blocked, is the second broadcast signal (S705) and controls the second signal processor 105 to process the received broadcast signal (S709). Subsequently, the processed broadcast signal is transmitted to the external display apparatus 30 and is provided as an image for a user.

When a voltage, current or power in a level to be determined as a broadcast signal is not detected by the connector 100 while the operation of the signal receiver 20 is blocked, the controller 103 determines that no broadcast signal is detected (S701). The converter voltage controller 109 controls the power supplier to supply power to the converter 23, thereby starting the receiving operation of the signal receiver 20 (S703). The controller 103 determines that a broadcast signal received during the operation of the signal receiver 20 receiving the broadcast signal is the first broadcast signal (S707) and controls the first signal processor 101 to process the received broadcast signal (S708). Subsequently, the processed broadcast signal is transmitted to the external display apparatus 30 and is provided as an image for the user.

According to another embodiment, when a broadcast signal is detected while the receiving operation of the signal receiver 20 is blocked, the controller 103 does not determine whether the first broadcast signal or the second broadcast signal is received but may control the second signal processor 105 to process the detected broadcast signal. Further, when no broadcast signal is detected while the receiving operation of the signal receiver 20 is blocked, the controller 103 may start the receiving operation of the signal receiver 20 and control the first signal processor 101 to process a received broadcast signal.

According to still another embodiment, the converter voltage controller 109 may adjust a level of a voltage supplied to the converter 23, instead of blocking the voltage, thereby transmitting a control command to stop or start the operation of the signal receiver 20, which has been described above.

FIGS. 8 and 9 are block diagrams illustrating operations of receiving and processing a broadcast signal in a broadcast receiving apparatus 10 according to an example embodiment.

Hereinafter, an operation process of the broadcast receiving apparatus 10 is described with reference to FIG. 8. First, a converter voltage controller 109 controls a power supplier to block power supplied to a converter 23 (S800). A dotted line from the converter voltage controller 109 to the converter 23 via a connector 100 indicates flow of a control command output by the converter voltage controller 109 to block the power supplied to the converter 23. As described above, the converter voltage controller 109 may block the power supplied to the converter 23 or a changed level of a voltage to the converter 23, thereby blocking an operation of a signal receiver 20 receiving a first broadcast signal.

A controller 103 determines whether a broadcast signal is detected by the connector 100 while the operation of the signal receiver 20 receiving the first broadcast signal is blocked (S801). More specifically, when a voltage, current or power in a level to be determined as a broadcast signal is detected by the connector 100 while the operation of receiving the first broadcast signal is blocked, the controller 103 determines that a second broadcast signal is received and transmits the received broadcast signal to a second signal processor 105 (S803). A process of transmitting the second broadcast signal to the second signal processor 105 via the connector 100 is indicated by a dotted line (S803).

The second signal processor 105 processes the received second broadcast signal and provides the processed second broadcast signal for a connected display apparatus 30 according to control by the controller 103 (S805). Next, the display apparatus 30 displays an image based on the processed broadcast signal.

Hereinafter, an operation process of the broadcast receiving apparatus 10 is described with reference to FIG. 9. When no broadcast signal is detected by the connector 100 while the operation of the signal receiver 20 receiving the first broadcast signal is blocked (S900), the converter voltage controller 109 supplies power to the converter 23 (S901) and the signal receiver 20 starts the operation of receiving the first broadcast signal with the power supplied (S903). A dotted line from the converter voltage controller 109 to the converter 23 via the connector 100 indicates flow of a control command from the converter voltage controller 109 to supply power to the converter 23 and flow of the power supplied to the converter 23 (S901).

When the receiving operation of the signal receiver 20 is started, the first broadcast signal is received through an antenna 21. The received first broadcast signal is converted by the converter 23 and is transmitted to the connector 100, and the connector 100 outputs the first broadcast signal to a first signal processor 101 according to control by the controller (S903). A dotted line from the signal receiver 20 to the first signal processor 101 via the connector 100 indicates flow of the received first broadcast signal (S903).

The first signal processor 101 processes the first broadcast signal and provides the processed first broadcast signal for the connected display apparatus 30 according to control by the controller 103 (S905). Next, the display apparatus 30 displays an image based on the processed broadcast signal.

According to another embodiment, the broadcast receiving apparatus 10 may be configured to display an image included in the processed broadcast signal on a display 107 included in the broadcast receiving apparatus 10, which has been described above.

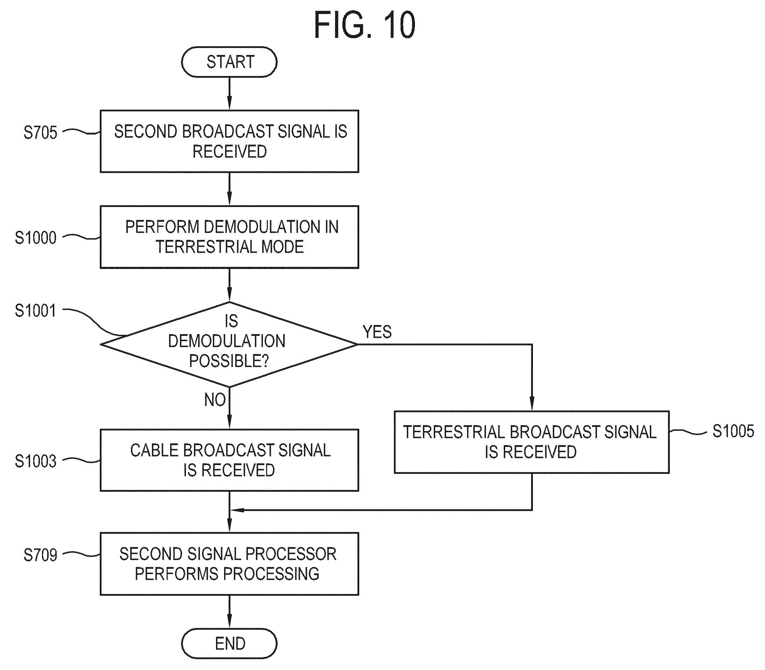

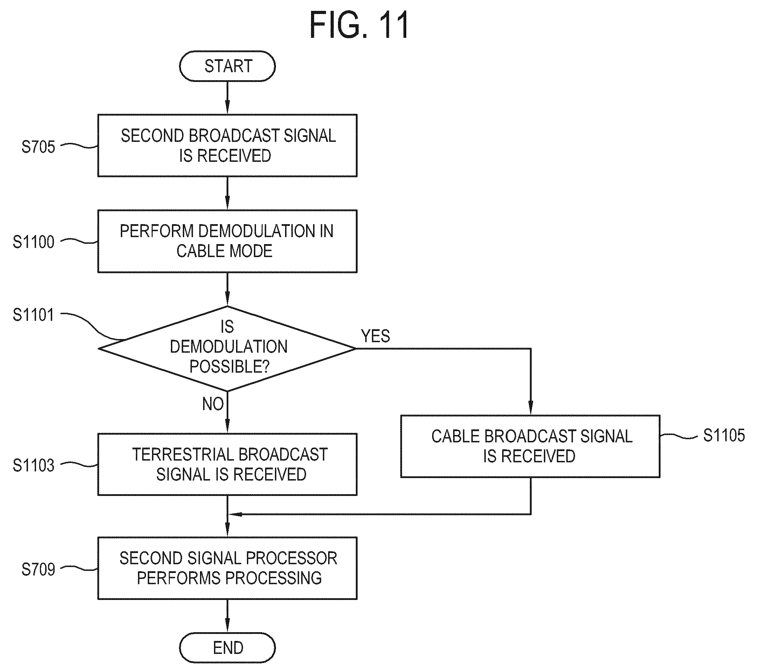

FIGS. 10 and 11 are flowcharts for determining whether a second broadcast signal is a terrestrial broadcast signal or a cable broadcast signal when the second broadcast signal is received.

As described above, since a terrestrial broadcast signal is modulated and transmitted in a terrestrial mode according to a communication protocol between a terrestrial broadcasting station and the broadcast receiving apparatus 10, the terrestrial broadcast signal may be demodulated in the same terrestrial mode. Likewise, a cable broadcast signal may be demodulated only in a cable mode.

Accordingly, when it is determined that the second broadcast signal is received (S705 in FIG. 7), the controller 103 controls the second signal processor 105 to demodulate the second broadcast signal in a terrestrial mode (S1000). The controller 103 determines whether it is possible to demodulate the second broadcast signal in the terrestrial mode (S1001). When it is possible to demodulate the second broadcast signal in the terrestrial mode, the controller 103 determines that a terrestrial broadcast signal is received (S1005). When it is impossible to demodulate the second broadcast signal in the terrestrial mode, the controller 103 determines that a cable broadcast signal is received (S1003).

According to another embodiment, the received second broadcast signal may be demodulated in a cable mode first. When it is determined that the second broadcast signal is received (S705), the controller 103 controls the second signal processor 105 to demodulate the second broadcast signal in the cable mode (S1100). When it is possible to demodulate the second broadcast signal (S1101), the controller 103 determines that a cable broadcast signal is received (S1005). When it is impossible to demodulate the second broadcast signal (S1101), the controller 103 determines that a terrestrial broadcast signal is received (S1103).

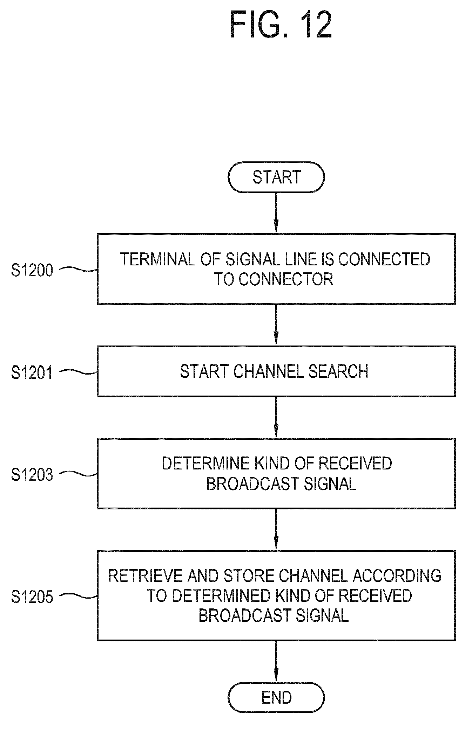

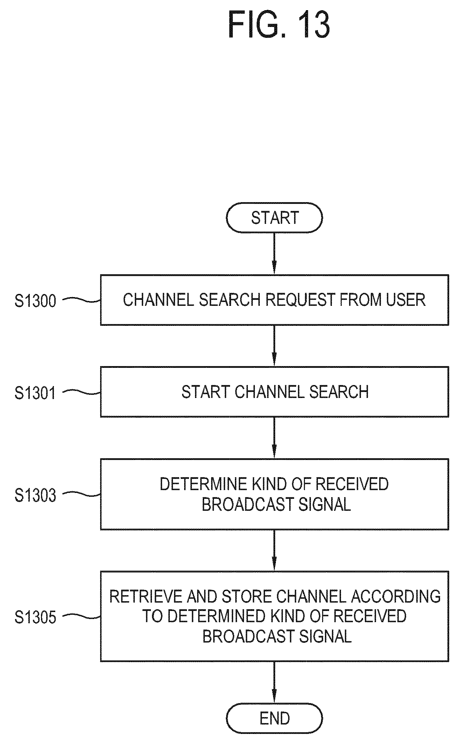

FIGS. 12 and 13 are flowcharts illustrating a broadcast receiving apparatus that performs a channel search function according to an example embodiment. The broadcast receiving apparatus 10 according to the present embodiment is configured to determine a kind of a received broadcast signal and to automatically retrieve and store a channel of the broadcast signal.

First, when a terminal of a signal line transmitting a broadcast signal is connected to a connector 100 (S1200), a controller 103 starts a channel search (S1201). The controller 103 determines a kind of a received broadcast signal (S1203) and finally retrieves and stores a channel according to the determined kind of the broadcast signal (S1205).

When a user connects a signal line to transmit a first broadcast signal or a second broadcast signal to the connector 100 (S1200), the controller 103 accepts the connection as a signal and starts a channel search function to start the channel search function (S1201). Before retrieving and storing a channel of a received broadcast signal, the controller 103 determines whether the received broadcast signal is the first broadcast signal or the second broadcast signal. When the received signal is the first broadcast signal, the controller 103 determines that a satellite broadcast signal is received. When the second broadcast signal is received, the controller 103 determines whether the received signal is a terrestrial broadcast signal or a cable broadcast signal. When the kind of the signal is determined (S1203), the controller 103 retrieves and stores a channel of the received broadcast signal according to the determined kind of the broadcast signal (S1205).

According to another embodiment, the controller 103 may be configured to start a channel search upon starting to receive a broadcast signal, no broadcast signal being received even though a signal line is connected to the connector 100.

According to still another embodiment illustrated in FIG. 13, when there is a channel search request from a user, the controller 103 may start the channel search function. First, when the channel search function is requested through a user input receiver 111 (S1300), the controller 103 starts a channel search (S1301). Next, the controller 103 determines a kind of a received broadcast signal (S1303) and finally retrieves and stores a channel according to the determined kind of the broadcast signal (S1305).

According to yet another embodiment, the controller 103 may selectively controls an operation of a signal receiver 20 first to determine whether a received broadcast signal is a first broadcast signal or a second broadcast signal when a signal line is connected to the connector 100 or a user requests the channel search function, without a separate operation of starting a channel search. When the received broadcast signal is the first broadcast signal, the controller 103 retrieves and stores a received channel of a satellite broadcast signal. When the received broadcast signal is the second broadcast signal, the controller 103 controls a second signal processor 105 to demodulate a broadcast signal in a lowest frequency band received first in a terrestrial mode. When it is possible to demodulate the broadcast signal in the terrestrial mode, the controller 103 stores a received broadcast signal in a remaining frequency band as a channel of a terrestrial broadcast signal. When it is impossible to demodulate the broadcast signal in the terrestrial mode, the controller 103 stores the received broadcast signal in the remaining frequency band as a channel of a cable broadcast signal. Further, the controller 103 controls the second signal processor 105 to demodulate the broadcast signal in the lowest frequency band received first in a cable mode and retrieves and stores a channel based on a demodulation result.

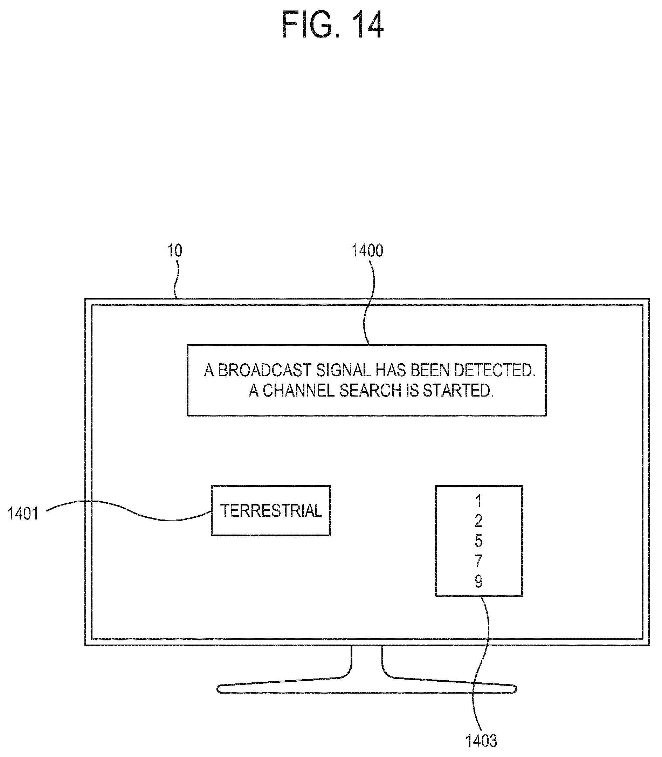

FIG. 14 illustrates a user interface (UI) displayed by a broadcast receiving apparatus 10 performing a channel search according to an example embodiment. According to the present embodiment, the broadcast receiving apparatus 10 starts a channel search function when a signal line is connected to a connector 100 or a request for a channel search function is input from a user. A display 107 or display apparatus 30 of the broadcast receiving apparatus 10 displays a UI indicating that a channel search starts. The UI includes a notification message 1400 indicating that a channel search starts as an external broadcast signal is detected, a kind of a received broadcast signal 1401, and a retrieved channel 1403.

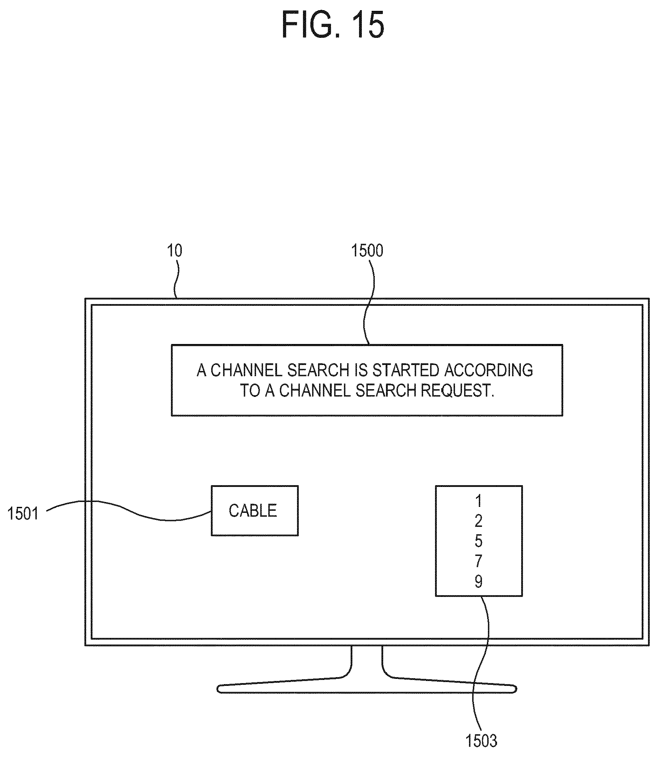

FIG. 15 illustrates a user interface (UI) displayed by a broadcast receiving apparatus 10 performing a channel search according to another example embodiment. According to the present embodiment, a channel search function starts when a channel search request is input from a user through a user input receiver 111. Here, a UI includes a notification message 1500 indicating that a channel search starts according to the channel search request from the user, a kind of a received broadcast signal 1501, and a retrieved channel 1503.

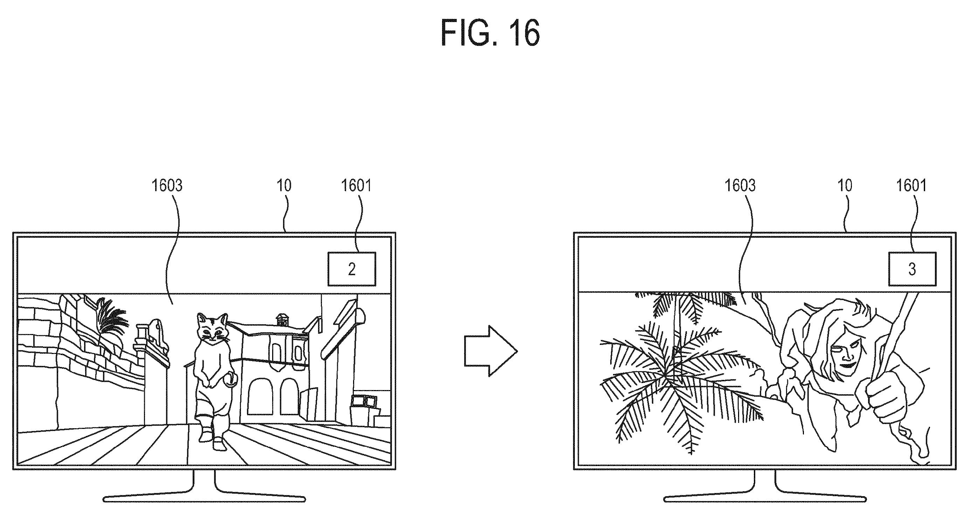

FIG. 16 illustrates an example of a broadcast receiving apparatus 10 that displays an image according to a received broadcast signal when a channel search is finished and a user selects a channel. The broadcast receiving apparatus 10 displays an image 1603 based on a channel selected by the user and the received broadcast signal and the selected channel 1601 on a connected external display apparatus 30 or a display 107 included in the broadcast receiving apparatus 10. When a channel change is performed, the channel changes to another stored channel and an image 1603 based on the changed channel and the changed channel 1601 are displayed.

## Claims

1. A broadcast receiving apparatus comprising:
a connector configured to be connected to a signal line that transmits one of a first broadcast signal received from a signal receiver and a second broadcast signal of a different kind from that of the first broadcast signal;
a first signal processor and a second signal processor configured to be connected to the connector to respectively process the first broadcast signal and the second broadcast signal received through the connector; and
a controller configured to determine which of the first broadcast signal and the second broadcast signal is received by selectively blocking an operation of the signal receiver receiving the first broadcast signal and to control a relevant processor among the first signal processor and the second signal processor to process the received signal of the first broadcast signal or second broadcast signal based on the result of the determination.

2. The broadcast receiving apparatus of claim 1, wherein the first broadcast signal comprises a satellite broadcast signal.

3. The broadcast receiving apparatus of claim 1, wherein the second broadcast signal comprises either of a terrestrial broadcast signal and cable broadcast signal.

4. The broadcast receiving apparatus of claim 3, wherein when the second broadcast signal is received, the controller selectively demodulates the second broadcast signal either in a mode for the terrestrial broadcast signal or in a mode for the cable broadcast signal to determine which one of the terrestrial broadcast signal and the cable broadcast signal is received and controls the second signal processor to process the received signal based on the result of the determination.

5. The broadcast receiving apparatus of claim 1, wherein the controller controls supply of power to the signal receiver to selectively block the operation of the signal receiver receiving the first broadcast signal.

6. The broadcast receiving apparatus of claim 5, wherein the signal receiver comprises a converter configured to down-convert a frequency of the first broadcast signal into a usable frequency according to a voltage level of the supplied power, and the controller comprises a converter voltage controller configured to control the voltage level of the power of the converter.

7. The broadcast receiving apparatus of claim 1, wherein the controller retrieves and stores a channel of the first broadcast signal or the second broadcast signal.

8. The broadcast receiving apparatus of claim 7, wherein the controller starts to retrieve the channel of the first broadcast signal or the second broadcast signal when the terminal of the signal line is connected to the connector.

9. The broadcast receiving apparatus of claim 7, further comprising a user input receiver configured to receive a user input, wherein the controller starts to retrieve the channel of the first broadcast signal or the second broadcast signal according to a channel search request from a user input through the user input receiver.

10. The broadcast receiving apparatus of claim 1, wherein the controller controls a display to display information on the first broadcast signal or the second broadcast signal.

11. A control method of a broadcast receiving apparatus comprising a connector configured to be connected to a terminal of a signal line that transmits one of a first broadcast signal received from a signal receiver and a second broadcast signal of a different kind from that of the first broadcast signal, the control method comprising:
determining which of the first broadcast signal and the second broadcast signal is received by selectively blocking an operation of the signal receiver receiving the first broadcast signal; and
performing corresponding signal processing to the first broadcast signal or the second broadcast signal among a plurality of types of signal processing based on a result of determining whether the first broadcast signal or the second broadcast signal is received.
